(19) Europäisches Patentamt
European Patent Office
Office européen des brevets

(11) **EP 3 901 713 B1**

(12) **EUROPÄISCHE PATENTSCHRIFT**

(45) Veröffentlichungstag und Bekanntmachung des Hinweises auf die Patenterteilung:
**16.08.2023 Patentblatt 2023/33**

(21) Anmeldenummer: **20171009.2**

(22) Anmeldetag: **23.04.2020**

(51) Internationale Patentklassifikation (IPC):
**G05B 17/02** (2006.01)

(52) Gemeinsame Patentklassifikation (CPC):
**G05B 17/02**

(54) **VERFAHREN UND SYSTEM ZUM BETRIEB EINER TECHNISCHEN ANLAGE MIT EINEM OPTIMALEN MODELL**

METHOD AND DEVICE FOR OPERATING A TECHNICAL SYSTEM WITH OPTIMAL MODEL

PROCÉDÉ ET SYSTÈME DE FONCTIONNEMENT D'UNE INSTALLATION TECHNIQUE DOTÉE D'UN MODÈLE OPTIMAL

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**27.10.2021 Patentblatt 2021/43**

(73) Patentinhaber: **Siemens Aktiengesellschaft 80333 München (DE)**

(72) Erfinder:
• **Hießl, Thomas**
  **1050 Wien (AT)**

• **Kemnitz, Jana**
  **1140 Wien (AT)**
• **Schall, Daniel**
  **2020 Hollabrunn (AT)**

(74) Vertreter: **Siemens Patent Attorneys Postfach 22 16 34 80506 München (DE)**

(56) Entgegenhaltungen:
**WO-A1-2019/131999     US-A1- 2007 005 311**
**US-A1- 2020 064 788**

**EP 3 901 713 B1**

**Beschreibung**

Die Erfindung betrifft ein Verfahren und System zum Betrieb einer technischen Anlage mit einem optimalen Modell, wobei die Anlage Teil des Systems mit einer ersten technische Anlage und zumindest einer zweiten technische Anlage ist, jede Anlage umfassend eine Steuervorrichtung mit einem Speicher und ein verbundenes technisches Gerät, und das System ferner einen Server mit einem Speicher (MEM) aufweist.

Ferner betrifft die Erfindung eine Anlage zum Betrieb mit einem optimalen Modell, umfassend eine Steuervorrichtung mit einem Speicher und ein technisches Gerät Die US 2020/064788 A1 beschreibt ein Verfahren und eine Steuereinrichtung zum Steuern eines technischen Systems mittels trainierter Steuermodelle.

"Federated Learning" (kurz "FL", auch als kollaboratives Lernen oder Verbundlernen bezeichnet) ist eine Technik des maschinellen Lernens (kurz "ML"), mit der ein Algorithmus über mehrere, dezentrale Edge-Geräte oder Server trainiert wird, die lokale Datenproben enthalten, ohne dabei deren Datenproben auszutauschen.

Dieser bekannte Ansatz steht im Gegensatz zu herkömmlichen zentralisierten Techniken des maschinellen Lernens, bei denen alle Datenproben auf einen Server hochgeladen werden, sowie zu klassischeren dezentralen Ansätzen, bei denen davon ausgegangen wird, dass lokale Datenproben identisch verteilt sind.

Durch föderiertes Lernen können mehrere Akteure ein gemeinsames, umfassendes Modell für maschinelles Lernen erstellen, ohne Daten gemeinsam zu nutzen, und so kritische Themen wie Datenschutz, Datensicherheit, Datenzugriffsrechte und Zugriff auf heterogene Daten ansprechen.

Das föderierte Lernen zielt darauf ab, einen Algorithmus für maschinelles Lernen, beispielsweise tiefe neuronale Netze, auf mehreren lokalen Datensätzen zu trainieren, die in lokalen Knoten enthalten sind, ohne Datenproben auszutauschen.

Das allgemeine Prinzip besteht darin, lokale Modelle an lokalen Datenproben zu trainieren und Parameter, wie die Gewichte eines tiefen neuronalen Netzwerks, zwischen diesen lokalen Modellen mit einer bestimmten Häufigkeit auszutauschen, um ein globales Modell zu erzeugen.

Föderierte Lernalgorithmen können einen zentralen Server verwenden, der die verschiedenen Schritte des Algorithmus koordiniert und als Referenzuhr fungiert, oder sie können Peer-to-Peer sein, wenn kein solcher zentralen Server vorhanden ist. Im Fall ohne Peer-to-Peer kann ein föderierter Lernprozess in mehrere Runden unterteilt werden, die jeweils aus vier allgemeinen Schritten bestehen.

Der Hauptunterschied zwischen föderiertem Lernen und verteiltem Lernen liegt in den Annahmen, die in Bezug auf die Eigenschaften der lokalen Datensätze getroffen wurden, da verteiltes Lernen ursprünglich auf die Parallelisierung der Rechenleistung abzielt, während föderiertes Lernen ursprünglich auf das Training heterogener Datensätze abzielt.

Während verteiltes Lernen auch darauf abzielt, ein einzelnes Modell auf mehreren Servern zu trainieren, wird häufig davon ausgegangen, dass die lokalen Datensätze identisch verteilt sind und ungefähr dieselbe Größe haben. Keine dieser Hypothesen wurde für das föderierte Lernen aufgestellt. Stattdessen sind die Datensätze in der Regel heterogen und ihre Größe kann mehrere Größenordnungen umfassen.

Um eine gute Aufgabenleistung eines endgültigen, zentralen Modells für maschinelles Lernen sicherzustellen, basiert das Verbundlernen auf einem iterativen Prozess, der in eine atomare Gruppe von Client-Server-Interaktionen unterteilt ist, die als Verbundlernrunde bezeichnet werden.

Jede Runde dieses Prozesses besteht darin, den aktuellen globalen Modellstatus an teilnehmende Knoten zu übertragen, lokale Modelle auf diesen lokalen Knoten zu trainieren, um eine Reihe potenzieller Modellaktualisierungen an jedem Knoten zu erstellen, und diese lokalen Aktualisierungen dann zu einer einzigen globalen Aktualisierung zu aggregieren und auf das globale Modell anzuwenden.

In der folgenden Methodik verwenden wir einen zentralen Server für diese Aggregation, während lokale Knoten abhängig von den Anweisungen des zentralen Servers ein lokales Training durchführen. Andere Strategien führen jedoch zu denselben Ergebnissen ohne zentrale Server in einem Peer-to-Peer-Ansatz unter Verwendung von Klatschmethoden.

Zur Initialisierung in einem Iterationsverfahren wird ein statistisches Modell (beispielsweise lineare Regression, neuronales Netzwerk, Boosting, etc.) ausgewählt, um auf lokalen Knoten trainiert und initialisiert zu werden. Knoten werden aktiviert und warten darauf, dass der zentrale Server Berechnungsaufgaben übernimmt.

Das Iterative Training werden für mehrere Iterationen von sogenannten Verbundlernrunden die folgenden Schritte ausgeführt:

Auswahl: Ein Bruchteil der lokalen Knoten wird ausgewählt, um mit dem Training lokaler Daten zu beginnen. Sie alle erhalten vom aktuellen Server dasselbe aktuelle statistische Modell. Andere Knoten warten auf die nächste Verbundrunde.

Konfiguration: Der zentrale Server initiiert ausgewählten Knoten, das Modell auf eine vordefinierte Weise auf ihre lokalen Daten zu trainieren, wie für einige Stapelaktualisierungen eines Gradienten-Abstieg.

Berichten: Jeder Knoten gibt die lokal erlernten inkrementellen Modellaktualisierungen an den zentralen Server zurück. Der zentrale Server aggregiert alle Ergebnisse und speichert das neue Modell. Es behandelt auch Fehler, wie ein Verbindungsverlust mit einem Knoten während des Trainings. Das System kehrt in die Auswahlphase zurück.

Abschließen: Wenn ein vorgegebenes Beendigungskriterium, wie beispielsweise eine maximale Anzahl von Runden oder lokale Genauigkeiten, die höher als ein Ziel sind, erfüllt wurde, ordnet der zentrale Server das Ende des iterativen Trainingsprozesses an. Der zentrale Server kann ein robustes Modell enthalten, das auf mehreren heterogenen Datenquellen trainiert wurde.

Im Stand der Technik kann es jedoch in bestimmten Anwendungen dazu kommen, dass selbst die gemeinsam trainierten Modelle eine unzureichende Genauigkeit aufweisen.

Es ist Aufgabe der Erfindung diesen Nachteil im Stand der Technik zu überwinden und die Genauigkeit von FL-Modellen weiter zu verbessern.

Die erfindungsgemäße Aufgabe wird durch ein Verfahren eingangs genannter Art gelöst, wobei folgende Verfahrensschritte ausgeführt werden:

Q1) Erzeugen eines Geräte-Basismodells bezüglich zumindest eines der technischen Geräte,

Q2) Verteilen des Geräte-Basismodells an die erste und die zumindest eine zweite Steuervorrichtung,

Q3) Erzeugen, Trainieren und Speichern eines ersten Gerätemodells durch die erste Steuervorrichtung und zumindest eines zweiten Gerätemodells durch die zumindest eine zweite Steuervorrichtung, jeweils auf Basis des Geräte-Basismodells,

Q4) Bereitstellen des ersten und des zumindest einen zweiten Gerätemodells an den Server, sowie Speichern des ersten und des zumindest einen zweiten Gerätemodells in einem Modell-Speicher des Servers,

Q5) Laden und Bereitstellen zumindest jener Gerätemodelle an die entsprechende Steuer-Vorrichtung, welche nicht bereits in der Steuervorrichtung vorhanden sind,

Q6) Anwenden der im Schritt Q5) bereitgestellten Gerätemodelle auf die jeweilige Steuervorrichtung und Bestimmen einer jeweiligen Ähnlichkeitsfunktion bezüglich der ersten Steuervorrichtung, sowie des ersten Ähnlichkeitsmodells auf die zumindest eine zweite Steuervorrichtung und Bestimmen einer jeweiligen Ähnlichkeitsfunktion bezüglich der zumindest einen zweiten Steuervorrichtung,

Q7) Übermitteln der jeweiligen Ähnlichkeitsfunktionen an den Server,

Q8) Bilden von zumindest einer Kunden-Gruppe und Erstellen eines jeweiligen Gruppen-Modells durch föderiertes Lernen innerhalb der Kunden-Gruppe unter Anwendung der Ähnlichkeitsfunktionen durch den Server,

Q9) Auswählen und Laden von einem Betriebs-Modell aus dem zumindest einen Gruppen-Modell für eine Anlage und Bereitstellen des Betriebs-Modells an deren Steuervorrichtung, sowie Ansteuern des Geräts unter Zuhilfenahme des ausgewählten Betriebs-Modells als optimales Modell.

Unter einem Geräte-Basismodell wird ein ML-Modell zur Ähnlichkeitsberechnung (engl. "similarity model skeleton") verstanden.

Das Geräte-Basismodell, wie ein Autoencoder, wird unter Berücksichtigung der Datenstruktur der Kunden erstellt, ohne dabei die Dateninhalte kennen zu müssen.

Das Geräte-Basismodell kann nachfolgend, beispielsweise von der ersten Steuervorrichtung empfangen und anhand der spezifischen Kundendaten trainiert werden, wie durch Anpassung von Gewichten des Autoencoders mittels eines, dem Fachmann bekannten "Backpropagation"-Algorithmus.

In einem weiteren Schritt kann das Gerätemodell für eine zweite Steuervorrichtung spezifisch abgeleitet werden und zur Berechnung der Ähnlichkeit gegenüber der ersten Steuervorrichtung verwendet werden.

Die Modell- beziehungsweise Kunden-Gruppe kann beispielsweise anhand von besonders wichtigen Betriebs-Kennzahlen des Geräts wie Temperatur, Druck etc., der Umgebungsbedingungen oder Benutzer-Parametern definiert werden.

Eine Kunden-Gruppe kann mehrere Kunden mit jeweiligen, jeweils ein technisches Gerät umfassende Anlagen haben, hat aber nur ein Modell für die Anlage beziehungsweise für das Gerät.

Die Ähnlichkeitsfunktion kann im einfachsten Fall ein Skalar, also ein Ähnlichkeitswert sein. Dementsprechend wird beim Bilden der Ähnlichkeitsfunktion ein numerischer Ähnlichkeitswert zwischen zwei Ähnlichkeitsmodellen durch Anwendung eines Ähnlichkeits-Verfahrens bestimmt, wie im Schritt Q6) angegeben.

Die Ähnlichkeitsfunktion kann auch mehr aus einen Ähnlichkeitswert umfassen, beispielsweise für unterschiedliche Betriebsmodi des Geräts jeweils unterschiedliche Ähnlichkeiten, welche mithilfe der Ähnlichkeitsfunktion beschrieben werden können.

Grundsätzlich ist es nicht notwendig, dass die Assets nur Geräte gleicher Bauart oder nur Geräte mit gleichen Betriebsverhalten umfasst. Es ist jedoch klar, dass die Modelle umso effizienter verbessert werden können, wenn im erfindungsgemäßen Verfahren ähnliche Geräte berücksichtigt werden.

Die Ähnlichkeit von Geräten kann sich auf konstruktive oder auch operative Merkmale beziehen. Es können Einzelparameter wie auch Gesamteigenschaften zur Bestimmung der Ähnlichkeit herangezogen werden, wie die Betriebstemperatur, mechanische Vibrationen oder die Leistungsaufnahme einer einzelnen Komponente oder des gesamten Systems.

Beispielsweise können Elektromotoren, Pumpen, Fräsmaschinen, Produktionsmaschinen, Industrieanlagen, Fahrzeuge jeweils zueinander ähnlich sein, indem sie dieselbe Bauart aufweisen, in vergleichbarem Betriebsumfeld betrieben werden oder dieselbe Leistung von Einzelkomponenten oder eines Systems ausweisen.

In einer Weiterbildung der Erfindung ist es vorgesehen, dass nach dem Schritt Q7) ein weiterer Schritt ausgeführt wird:

Q7a) Berechnen von zumindest einem Centroid-Modell auf Basis eines "federated averaging"-Verfahrens unter Verwendung der Ähnlichkeitsfunktionen,

und im Schritt Q8) beim Bilden von zumindest einem Gruppen-Modell zumindest ein Centroid-Modell berücksichtigt wird.

Ein Centroid-Modell kann bei der Erzeugung von Gruppen-Modellen dazu dienen, jene Betriebsmodelle höher zu gewichten, die dem Centroid-Modell näher, bzw. ähnlicher sind. Dadurch kann die Genauigkeit weiter verbessert werden.

zu einem Geräte-Basismodell alternative Modelle verfügbar sind, welche zusätzliche Merkmale, Parameter oder Kenngrößen des Geräts umfassen können. Dadurch kann beim Hinzufügen eines weiteren, neuen Geräts ein genaueres ML-Modell beispielsweise für ein spezifisches Merkmal angeboten werden.

In einer Weiterbildung der Erfindung ist es vorgesehen, dass nach dem Schritt Q7) ein weiterer Schritt ausgeführt wird:

Q7b) Speichern der Ähnlichkeitsfunktionen in einer Ähnlichkeitsmatrix.

Dadurch kann erreicht werden, dass eine schnelle Suche von Ähnlichkeiten durchgeführt werden kann und eine Teilmenge der Matrix besonders effizient und schnell bestimmt werden kann, und zu einer Modell-Bildung oder Verwendung herangezogen werden.

Grundsätzlich sind auch andere Datenstrukturen zum Speichern der Ähnlichkeitswerte beziehungsweise Ähnlichkeitsfunktionen geeignet, jedoch können die Daten mittels der Matrix besonders effizient verarbeitet werden.

In einer Weiterbildung der Erfindung ist es vorgesehen, dass im Schritt Q8) beim Bilden des zumindest einen Gruppen-Modells zumindest eine Gewichtungsfunktion angewandt wird.

Dadurch können auf eine einfache Weise Daten aggregiert werden, welche beispielsweise je nach Anwendung unterschiedlich relevant sind.

In einer Weiterbildung der Erfindung ist es vorgesehen, dass das Erzeugen des Geräte-Basismodells vom Server durchgeführt wird.

Es ist klar, dass das Geräte-Basismodell vor dem Beginn des Verfahrens vorhanden sein muss. Neue Kunden können auf dieses Geräte-Basismodell zugreifen.

Dadurch kann auf eine besonders einfache Weise ein Geräte-Modell als gemeinsame Ausgangsbasis für weitere Lernrunden angewandt werden.

In einer Weiterbildung der Erfindung ist es vorgesehen, dass die Anlage über ein lokales Netzwerk mit der Steuervorrichtung verbunden ist, und über ein öffentliches Netzwerk mit dem Server verbundenen ist.

Durch das Verfahren wird ein guter Datenschutz erreicht, da keine Geräte-Daten an den Server geschickt werden, sondern nur Modell-Daten. Die Geräte-Daten können beispielsweise von einer Firewall geschützt werden.

Dennoch kann ein gemeinsames FL-Modell trainiert werden und mehrere Geräte dadurch untereinander verbunden werden, um voneinander lernen zu können.

In einer Weiterbildung der Erfindung ist es vorgesehen, dass die zumindest eine zweite Anlage jeweils über ein lokales Netzwerk mit der jeweiligen Steuervorrichtung verbunden ist, und jeweils über ein öffentliches Netzwerk mit dem Server verbundenen ist.

Die erfindungsgemäße Aufgabe wird durch ein System eingangs genannter Art gelöst, wobei das System dazu eingerichtet ist, die erfindungsgemäßen Verfahrensschritte auszuführen.

Die erfindungsgemäße Aufgabe wird durch ein System eingangs genannter Art gelöst, wobei die Steuervorrichtung dazu eingerichtet ist, folgende Verfahrensschritte auszuführen:

R1) Empfangen eines Geräte-Basismodells,
R2) Erzeugen, Trainieren und Speichern eines ersten Gerätemodells auf Basis des Geräte-Basismodells,
R3) Bereitstellen des Gerätemodells über eine erste Datenschnittstelle,
R4) Empfangen von zumindest einem zweiten Gerätemodell, welches nicht bereits in der Steuervorrichtung vorhanden ist, mittels einer zweiten Datenschnittstelle,
R5) Anwenden des im Schritt R4) empfangenen zumindest einen zweiten Gerätemodells auf die Steuervorrichtung und Bestimmen einer Ähnlichkeitsfunktion bezüglich des ersten Gerätemodells,
R6) Bereitstellen der Ähnlichkeitsfunktion über eine dritte Datenschnittstelle,
R7) Empfangen eines Betriebs-Modells, welches von zumindest einem Gruppen-Modell unter Anwendung der Ähnlichkeitsfunktion gebildet wurde, mittels einer vierten Datenschnittstelle, sowie Ansteuern des Geräts unter Zuhilfenahme des Betriebs-Modells als optimales Modell.

In einer Weiterbildung der Erfindung ist es vorgesehen, dass die erste und/oder zweite und/oder dritte und/oder vierte Datenschnittstelle durch ein öffentliches Netzwerk gebildet ist, und die Anlage über ein lokales Netzwerk mit der Steuervorrichtung verbunden ist.

Durch das Verfahren wird ein guter Datenschutz erreicht, da keine Geräte-Daten an den Server geschickt werden, sondern nur Modell-Daten. Die Geräte-Daten können beispielsweise von einer Firewall-Vorrichtung geschützt werden.

Die Erfindung wird nachfolgend anhand eines in den beigeschlossenen Zeichnungen dargestellten Ausführungsbeispiels näher erläutert. In den Zeichnungen zeigt:

Fig. 1    eine Systemarchitektur mit einem industriellen Gerät, welches mittels einem ML-Modell gesteuert wird,

Fig. 2    schematisch zwei industrielle Edge-Geräte, die jeweils einen Kunden darstellen,

Fig. 3    ein Ausführungsbeispiel einer erfindungsgemäßen Vorrichtung,

Fig. 4    eine beispielhafte, schematische Darstellung des erfindungsgemäßen Verfahrens,

Fig. 5    ein Ausführungsbeispiel der Erfindung in Form eines Pseudo-Codes,

Fig. 6    ein Ausführungsbeispiel der Erfindung in Form eines Pseudo-Codes zur Bildung von Kohorten,

Fig. 7    ein weiteres Ausführungsbeispiel der Erfindung in Form eines Pseudocodes.

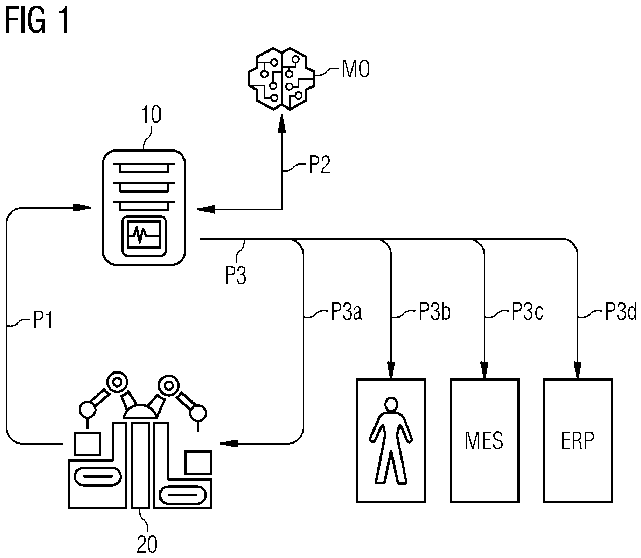

**Fig. 1** zeigt eine Systemarchitektur mit einem industriellen Gerät, welches mittels einem ML- (engl. "Machine Learning") Modell gesteuert wird.

Um zu vermeiden, dass beispielsweise Assets wie Geräte, Maschinen oder Anlagen während eines Produktions-Betriebs beschädigt werden, werden ML-Modelle trainiert, um Anomalien basierend auf in der Vergangenheit aufgezeichneten Sensordaten zu erkennen. Darüber hinaus werden diese Modelle in Industriegebäuden beispielsweise für Industriesteuerungssysteme eingesetzt und aufgerufen, um Anomalien zu erkennen und zu klassifizieren. Auf diese Weise können Bediener benachrichtigt, der aktuelle Vorgang gestoppt oder die Produktionsgeschwindigkeit verringert werden.

Darüber hinaus können Änderungen des Produktionsplans eingeleitet werden, um den Aufruf des betroffenen Assets zu vermeiden. In diesem Fall berücksichtigt der Produktionsprozess redundante Assets, wenn diese installiert sind und über genügend Kapazität verfügen. Dies kann durch Interaktion mit Manufacturing Execution Systems (MES) realisiert werden. Darüber hinaus können Ersatzteile automatisch bestellt werden, wenn das Modell das Problem klassifiziert und eine Lösung mit hoher Genauigkeit ableitet.

Das Trainieren von ML-Modellen ausschließlich anhand der Daten eines Kunden (engl. "client"), das heißt von einem einzigen Anlagen-Betreiber, kann jedoch dazu führen, dass die Erkennung und Klassifizierung von Anomalien möglicherweise eine geringe Genauigkeit aufweist, da diese Modelle nur Muster berücksichtigen, die aus Vorfällen in der Vergangenheit dieses Kunden abgeleitet wurden.

In der Figur ist ein Kunde mit einem IoT-Gerät 10, wie ein allgemeines technisches Gerät, wie eine Industrieanlage, ein Roboter, eine CNC-Fräsmaschine oder Ähnliches, das heißt ein "Asset", gezeigt.

Das Gerät 10 ist mit einem Edge-Vorrichtung 20 verbunden, von welchem auf ein ML-Modell M0 zugegriffen werden kann, das beispielsweise von einer Rechenvorrichtung mit einem Speicher bereitgestellt wird.

Durch die Edge-Vorrichtung 20 werden folgende Prozessschritte ausgeführt:

P1    Zunächst werden Daten des Geräts 10 erfasst, aufbereitet und dem Edge-Vorrichtung 20 zur Verfügung gestellt.

P2    Anschließend erfolgt eine Anomalie-Detektion durch einen Vergleich der Daten mit dem ML-Modell M0.

P3    Dann erfolgt eine aus dem Schritt P2 abgeleitete Steuerung des Geräts 10.
P3a Bei Identifikation eines Produktionsproblems kann beispielsweise ein Prozessschritt "stopp" beziehungsweise "reduzieren" der aktuellen Bearbeitung ausgelöst werden, welcher in das laufende Verfahren eingreift.

P3b Ferner kann ein "Alarm" an ein Bedienungspersonal ausgegeben werden.

P3c Außerdem kann die Produktion aufgrund des Problems mittels eines "Manufacturing Execution Systems" (MES) neu geplant werden.

P3d Außerdem kann die Bestellung eines Ersatzteils mithilfe eines ERP- ("Enterprise Resource Planning") Systems eingeleitet werden.

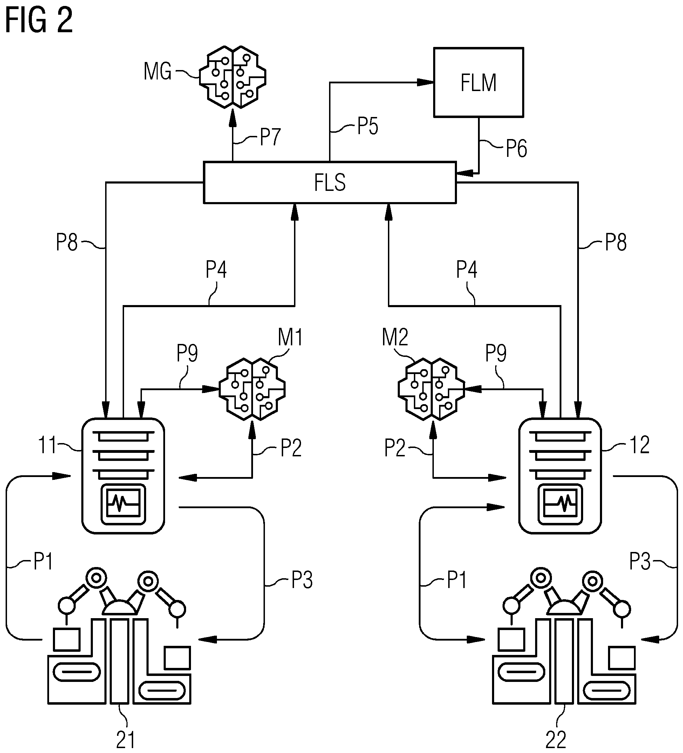

**Fig. 2** zeigt schematisch zwei industrielle Edge-Geräte 11 und 12, die jeweils einen Kunden darstellen. Es ist das Ziel Anomalien in den jeweiligen Produktionsanlagen korrekt zu klassifizieren, wobei die Anlagen durch entsprechende ML-Modelle P2, P3 abgebildet sind und in Rechenvorrichtungen mit jeweiligen Speichern abgespeichert sind, auf die die Edge-Geräte 11, 12 zugreifen können.

Im Weiteren werden nun folgende, die Fig. 1 ergänzenden Prozessschritte P4 bis P9 erläutert.

Der Kontroll- und Datenfluss kann mit den Prozessschritten P1 bis P3 beschrieben werden und entspricht dem ursprünglichen Anomalie-Klassifizierungsprozess, der im vorherigen Abschnitt beschrieben wurde.

Dieser Prozess wird nun durch einen zusätzlichen Modellaktualisierungs-Workflow mit den Prozessschritten P4 bis P9 erweitert, der parallel zu den Prozessschritten P1 bis P3 ausgeführt werden kann.

P4 Durch Modellieren und Auswerten von Metriken werden das aktuelle ML-Modell, wie neuronale Netzwerkgewichte, und Metadaten wie z. B. die Größe des Datensatzes und die Anzahl verschiedener Klassen auf einen Server 30 hochgeladen. In nachfolgenden Prozessiterationen werden auch Bewertungs-Metriken hochgeladen, wobei beispielsweise die Genauigkeit des Klassifizierers berücksichtigt wird, der in einem lokal gehaltenen Validierungsdatensatz ausgewertet wird.

P5 Es erfolgt eine Verteilung von Modellen und Daten, bei welcher ein IFL- ("Industrial Federated Learning") Gruppenmanager FLM vom IFL-Server FLS aufgerufen wird, um Gruppen basierend auf der Verteilung der Klassen der teilnehmenden Kunden zu erstellen. Kunden mit ähnlicher Klassenverteilung werden in dieselbe Gruppe eingeteilt. Dies kann beispielsweise über ein Clustering unter Verwendung von Abstandsmaßen, die sich auf Ähnlichkeits- und Differenzdatenverteilungen konzentrieren, erfolgen. Darüber hinaus wird die Gruppe von einer konfigurierbaren Anzahl von Mitarbeitern anderer Gruppen unterstützt. Diese Mitarbeiter werden identifiziert, um Wissen basierend auf der Klassifizierung von Klassen beizutragen, die in der jeweiligen Gruppe weniger vorhanden sind.

P6 Die resultierende Gruppenkonfiguration wird an den IFL-Server zurückgegeben, um die Modellparameter von Gruppenmitgliedern und Mitarbeitern zu aggregieren.

P7 Das aktualisierte globale ML-Modell MG aller Gruppen wird mittels Aktualisierung von Aggregaten gespeichert.

P8 Das globale ML-Modell MG wird als Modell-Aktualisierung (update) an die Kunden weitergeleitet.

P9 Mittels erneuten Training mit aktualisierten Modellen M1, M2 wird das jeweilige globale Modell MG vom Kunden verwendet, um ein lokales Training auf dem Kunden zu initialisieren.

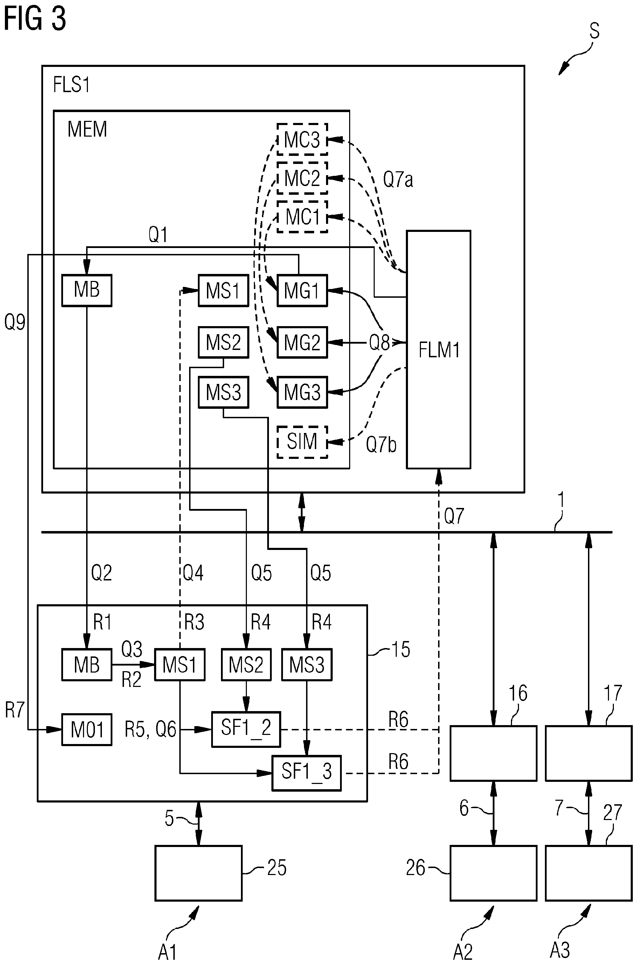

**Fig. 3** zeigt schematisch ein Ausführungsbeispiel der Erfindung in Form einer Vorrichtung zum Betrieb jeweils einer technischen Anlage A1-A3 mit einem jeweiligen optimalen ML-Modell.

Das System S umfasst eine erste technische Anlage A1, eine zweite technische Anlage A2 und eine dritte technische Anlage A3.

Jede Anlage A1-A3 umfasst jeweils eine Steuervorrichtung 15-17 mit einem Speicher und ein technisches Gerät 25-27.

Das System weist ferner einen Server FLS1 mit einem Speicher MEM auf.

Die erste, zweite und dritte Anlage A1-A3 ist jeweils über ein lokales Netzwerk 5-7 mit der jeweiligen Steuervorrichtung 15- 17, und jeweils über ein öffentliches Netzwerk 1 mit dem Server FLS1 verbunden.

Alternativ könnten die Anlagen A1-A3 gemeinsam eine Industrieanlage mit mehreren technischen Geräten bilden und miteinander über ein lokales Netzwerk verbunden sein. In diesem Fall könnte diese Industrieanlage mit dem Server FLS1 über eine Proxy-Vorrichtung, beispielsweise samt einer Firewall-Vorrichtung, mit dem öffentlichen Netzwerk verbunden sein.

In diesem Beispiel sind die technischen Anlagen A1-A3 drei Kunden mit jeweiligen Edge-Geräten.

Die Edge-Geräte 15-17 können auf ein ML-Modell MB zugreifen, das beispielsweise von einer Rechenvorrichtung mit einem Speicher bereitgestellt wird.

Es werden folgende Prozessschritte von dem System ausgeführt:

Q1 Erzeugen und Speichern eines Geräte-Basismodells MB auf Basis eines technischen Geräts.

Q2 Verteilen des Geräte-Basismodells MB an die erste, zweite und dritte Edge-Vorrichtung 15-17 des jeweiligen Kunden.

Q3 Erzeugen und Trainieren auf Basis des Geräte-Basismodells MB

•eines ersten Gerätemodells MS1 durch die erste Edge-Vorrichtung 15,
•eines zweiten Gerätemodells MS2 durch die zweite Edge-Vorrichtung 16 und
•eines dritten Gerätemodells MS3 durch die dritten Edge-Vorrichtung 17.

Q4 Bereitstellen des trainierten ersten, zweiten und dritten Gerätemodells MS1-MS3 an einen IFL-Server FLS1 und Speichern in einem Modell-Speicher MEM des IFL-Servers FLS1.

Q5 Laden und Bereitstellen

•des zweiten und dritten Ähnlichkeitsmodells MS2, MS3 an die erste Edge-Vorrichtung 15,
•des ersten und dritten Ähnlichkeitsmodells MS1, MS3 an das zweite Edge-Vorrichtung 16 und
•des ersten und zweiten Ähnlichkeitsmodells MS1, MS2 an das dritte Edge-Vorrichtung 17.

Q6 Anwenden

•des zweiten und dritten Ähnlichkeitsmodells MS2, MS3 auf die erste Edge-Vorrichtung 15 und Bestimmen von jeweiligen Ähnlichkeitswerten SF1_2, SF1_3 bezüglich des ersten Edge-Geräts 15,
•des erste und dritten Ähnlichkeitsmodells MS1, MS3 auf das zweite Edge-Vorrichtung 16 und Bestimmen von jeweiligen Ähnlichkeitswerten SF2_1, SF2_3 bezüglich des zweiten Edge-Geräts 16,
•des ersten und zweiten Ähnlichkeitsmodells MS1, MS2 auf das dritte Edge-Vorrichtung 17 und Bestimmen von jeweiligen Ähnlichkeitswerten SF3_1, SF3_2 bezüglich des dritten Edge-Geräts 17,

Die Ähnlichkeitsfunktionen sind im vorliegenden Ausführungsbeispiel jeweils Skalare, also Ähnlichkeitswerte.

Q7 Übermitteln der jeweiligen Ähnlichkeitswerte SF1_2, SF1_3, SF2_1, SF2_3, SF3_1, SF3_2 an den IFL-Server FLS1.

Q7a Berechnen von zumindest einem Centroid-Modell MC1-MC3 auf Basis eines "federated averaging"-Verfahrens unter Verwendung der Ähnlichkeitsfunktionen (SF1_2, SF1_3, SF2_1, SF2_3, SF_3_1, SF3_2).
Ein Centroid-Modell MC1-MC3 stellt jeweils ein Modell mit der größten Ähnlichkeit innerhalb einer Gruppe von Ähnlichkeitsmodellen-Modellen MS1-MS3 dar.

Q7b Speichern der Ähnlichkeitswerte SF1_2, SF1_3, SF2_1, SF2_3, SF_3_1, SF3_2 in einer Ähnlichkeitsmatrix SIM.

Q8 Bilden von zumindest einer Kunden-Gruppe und Erstellen eines jeweiligen Gruppen-Modells MG1-MG3 durch föderiertes Lernen innerhalb der Kunden-Gruppe unter Anwendung der Ähnlichkeitswerte SF1_2, SF1_3, SF2_1, SF2_3, SF3_1, SF3_2 durch den IFLServer FLS1, wobei zumindest ein Centroid-Modell MC1-MC3 berücksichtigt und zumindest eine Gewichtungsfunktion auf das jeweilige Gruppen-Modell MG1-MG3 angewandt wird.

Q9 Auswählen und Laden von einem Betriebs-Modell M01 aus dem zumindest einen Gruppen-Modell MG1-MG3 für eine Anlage A1 und Bereitstellen des Betriebs-Modells M01 an deren Steuervorrichtung 15, sowie Ansteuern des Geräts 25 unter Zuhilfenahme des ausgewählten Betriebs-Modells M01 als optimales Modell.

Das Geräte-Basismodell MB wird vom Server erzeugt bzw. bereitgestellt.
Es ist klar, dass der Modell-Speicher MEM mit dem Server kommunizieren kann und beispielweise auch in einer Cloud gelegen sein kann. Der Modell-Speicher MEM ist dem IFL-Server FLS1 zugeordnet.
Unter der Gruppenbildung kann eine Gruppierung bzw. ein Clustering von verteilten FL Kunden nach ähnlichen Daten oder Datenmengen verstanden werden.
Gruppen können mit Gruppenbildungsalgorithmen unter Verwendung von Ähnlichkeitsmodellen, welche Datenschutz der verwendeten Daten oder Datenmengen sicherstellen gebildet werden. Dabei liefert ein derartiger Algorithmus die Ähnlichkeit von den Steuereinrichtungen der Kunden zurück.

Dies ermöglicht dem FL Prozess einen Wissensaustausch in geeigneten Gruppen zu betreiben, um damit die Genauigkeit zu verbessern.

Dabei können bekannte "Federated Averaging" Algorithmen je Gruppe vom IFL Server ausgeführt werden.

Zur Feststellung einer jeweiligen Ähnlichkeit von Daten zwischen zwei Kunden A und B, oder wie A1 und A2 im obigen Beispiel, kann ein Ähnlichkeits-Model eingeführt werden, wie beispielsweise ein Autoencoder, der mittels Daten eines Modells B trainiert wird und auf welchen Daten eines Modells A angewandt werden, um daraus die Ähnlichkeit zu berechnen.

Daraus resultiert ein Rekonstruktionsfehler, welcher groß ist, wenn die Daten nicht ähnlich sind und klein ist, wenn sie ähnlich sind. Mit anderen Worten kommen beide Kunden A und B in die gleiche Gruppe, wenn deren Ähnlichkeit groß ist.

Das Verfahren soll eine optimale Gruppenbildung, das heißt eine Gruppierung von FL Kunden mit ähnlichen Daten, ermöglichen, um eine Verbesserung der Genauigkeit innerhalb einer Gruppe sicherzustellen.

Es wird im Weiteren von einem zufälligen Gruppenalgorithmus ausgegangen, welcher auf Ähnlichkeitsmaßen beziehungsweise Distanzmaßen basiert, wie hierarchische Cluster-Algorithmen mit Varianten wie "SingleLinkage" bzw. "CompleteLinkage".

Der Gruppierungsprozess kann zum FL Prozess parallel ausgeführt werden. Resultierende Gruppen können dazu verwendet werde, die Reorganisation des FL Prozesses auszulösen, um nachfolgende Lernrunden auszuführen.

Die Ähnlichkeit zwischen zwei Kunden A und B kann durch folgenden Zusammenhang beschrieben werden:

$$\text{Ähnlichkeit}(A, B)$$
$$= \text{Ähnlichkeit}\big(\text{Ähnlichkeitsmodell}(A), \text{Datenmenge}(B)\big)$$
$$+ \text{Ähnlichkeit}\big(\text{Ähnlichkeitsmodell}(B), \text{Datenmenge}(A)\big)$$

Wobei der erste Term beim Kunden B berechnet wird, wo dessen Datenmenge vorliegt, und der zweite Term beim Kunden A berechnet wird, wo dessen Dataset vorliegt,

Beispielsweise kann der Rekonstruktionsfehler für ein AutoencoderÄhnlichkeitsmodell berechnet werden:

$$\text{Ähnlichkeit}(A, B)$$
$$= \frac{1}{\text{Rekonstruktionsfehler}\big(\text{Autoencoder}(A), \text{Dataset}(B)\big)}$$
$$+ \frac{1}{\text{Rekonstruktionsfehler}\big(\text{Autoencoder}(B), \text{Dataset}(A)\big)}$$

Für eine erfindungsgemäße Anlage A1-A3 zum Betrieb mit einem optimalen Modell sind die für die jeweilige Steuervorrichtung 15-17 vorgesehenen Verfahrensschritte vorgesehen:

R1) entspricht Schritt Q2),
R2) entspricht Schritt Q3),
R3) entspricht Schritt Q4),
R4) entspricht Schritt Q5),
R5) entspricht Schritt Q6),
R6) entspricht Schritt Q7),
R7) entspricht Schritt Q9).

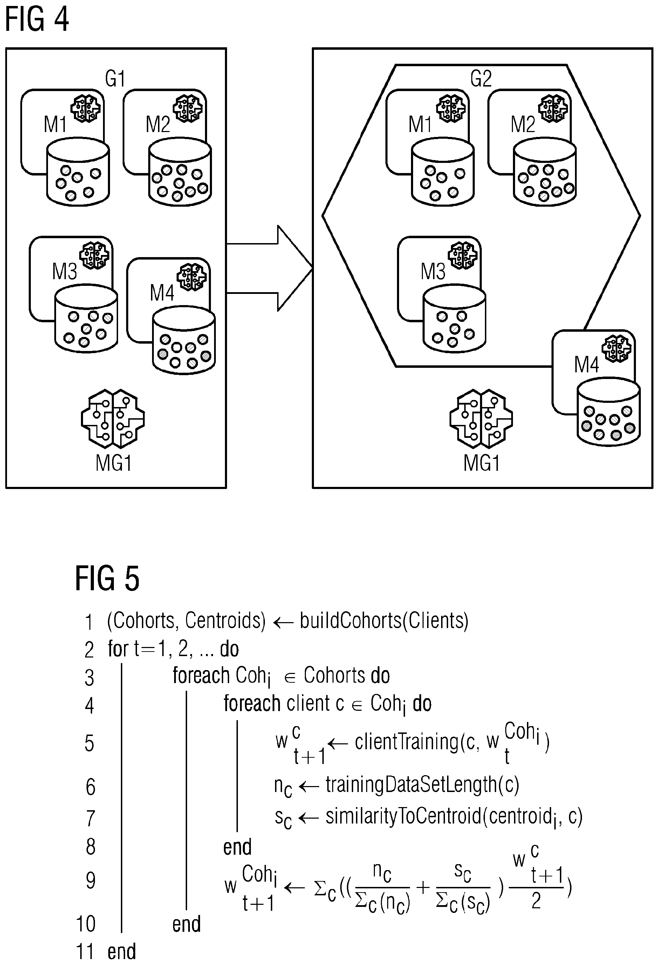

**Fig. 4** zeigt schematisch ein Beispiel für ein Verfahren, bei welchem Datenelemente für eine Kohorte gebildet werden und dadurch die Genauigkeit für eine bestimmte Gruppe verbessert werden kann.

Anders als im Stand der Technik, in welchem in einer Gruppe G1 die Gruppen-Modelle M1-M4 berücksichtigt werden, können in einer Gruppe G2 lediglich die Gruppen-Modelle M1-M3 inkludiert werden, da sich das Modell M4 zu stark von den anderen Modellen M1-M3 unterscheidet, also nicht ähnlich genug ist. Ein gemeinsames Gruppen-Modell MG2 der Gruppe G2 ist somit genauer.

Optional könnte in manchen Anwendungen das Modell M4 mit nur einer geringeren Gewichtung als die Gewichtung der Modelle M1-M3 berücksichtigt werden.

Mit anderen Worten werden ähnliche Kunden in einer Kohorte bzw. Gruppe zusammengefasst und Mitarbeiter, auch "collaborateur" genannt, mit ähnlichen, aber auch neuen Klassenbezeichnungen verknüpft .

Dies ermöglicht eine gute Leistung bei der Klassifizierung von Anomalien, die häufig in der Gruppe aufgezeichnet wurden, und ist darauf vorbereitet, potenzielle zukünftige Anomalien zu klassifizieren, die bereits von anderen Kunden aufgezeichnet wurden.

Das Vernachlässigen von Kunden, das heißt Gruppen-Teilnehmern, wie beispielsweise Gruppen-Teilnehmer mit dem Modell M4, mit sehr unterschiedlichen Klassenverteilungen stellt eine hohe Genauigkeit zum Klassifizieren der bekannten Anomalien sicher, indem nicht zu viel Verzerrung eingeführt wird.

Während das globale Modell wegen einer heterogenen Klassenverteilung nur eine mittlere Genauigkeit aufweist, zeigt das Gruppen-Modell durch die Aggregation von Modellen innerhalb derselben Gruppe und assoziierten Mitarbeitern eine verbesserte Genauigkeit.

Mit anderen Worten aggregiert das globale Modell alle Kunden-Modelle, während das Gruppen-Modell selektiv nur die Modelle der Kunden mit den Modellen M1-M3 in ein Gruppen-Modell MG1 aggregiert.

Die nachfolgenden Figuren zeigen nun Ausführungsbeispiele der Erfindung in Form von Pseudocodes.

Dabei wird eine Gruppe auch als "Kohorte" (engl. "cohort") bezeichnet.

"Centroiden" bezeichnen ein Zentrum einer Gruppe.

**Fig. 5** zeigt ein Ausführungsbeispiel der Erfindung in Form eines Pseudo-Codes.

In diesem Beispiel ist ein Kohorten-basierender FL-Prozess zur Verbesserung der Klassifikations-Modelle bei der Erkennung von Anomalien gezeigt.

Als Eingangsmenge ist eine endliche Menge an Kunden

$$Clients = \{c_1, c_2, ..., c_n\}$$

vorgesehen.

In Zeile 5 werden die ermittelten, hinsichtlich der Anomalie-Klassifizierung verbesserten Modelle für eine bestimmte Kohorte an den Kunden gesendet, indem zusätzlich ein Kunden-Training für die Kohorten-Modelle der nachfolgenden Runden angefordert wird. Daher kann der Kunde von den verbesserten Modellen nach jedem nachfolgenden Schritt profitieren.

In Zeile 9 ist erkennbar, dass bei der Bildung des jeweiligen Modells (w) Gewichtungen berücksichtigt werden.

Der Quotient im zweiten Term berücksichtigt beispielhaft eine Nähe zu einem Centroiden (*Centroids*) der jeweiligen Kohorte ($w^{Coh}$), um ähnlichere Modelle stärker einzubinden als weniger ähnliche Modelle.

Der gezeigte Algorithmus könnte dahingehen abgewandelt werden, indem bei Erreichen einer vorbestimmten, gewünschten Genauigkeit oder eines Maximums der Genauigkeit erreicht ist, der iterative Prozess abgebrochen wird.

Bei Hinzufügen von neuen Kunden zum FL-Prozess kann die Kohorten-Bildung auch dort ausgeführt werden.

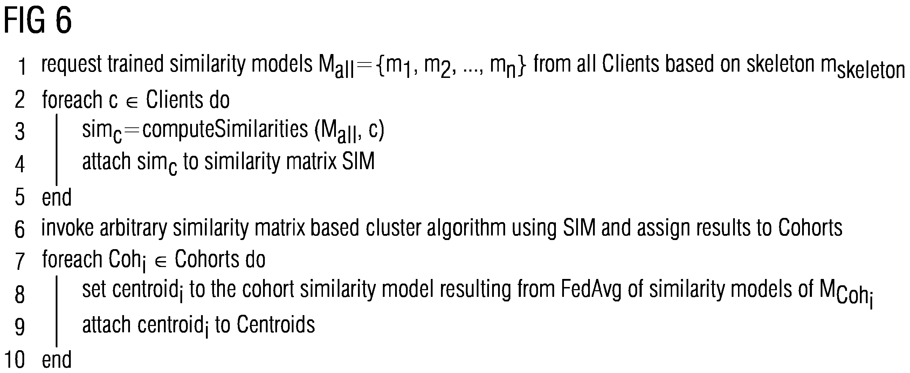

**Fig. 6** zeigt ein Ausführungsbeispiel der Erfindung in Form eines Pseudo-Codes zur Bildung von Kohorten.

Der Pseudo-Code der Fig. 6 wird durch den Pseudo-Code der Fig. 5 aufgerufen, um gemeinsames Lernen für mehrere Kohorten zu betreiben.

Als Eingangsmenge ist eine endliche Menge an Kunden

$$Clients = \{c_1, c_2, ..., c_n\}$$

welche am FL Prozess teilnehmen, vorgesehen.

Der Algorithmus liefert als Ausgang eine endliche Menge an

$$Cohorts = \{Coh_1, Coh_2, ..., Coh_k\} = \{(c_h, ..., c_i), (c_j, ..., c_l), ..., (c_m, ..., c_n)\}$$

an Kunden.

Ferner wird eine endliche Menge Centroiden (*Centroids*) an aggregierten Ähnlichkeitsmodellen für alle *Centroids* ∈ *Cohorts* bestimmt.

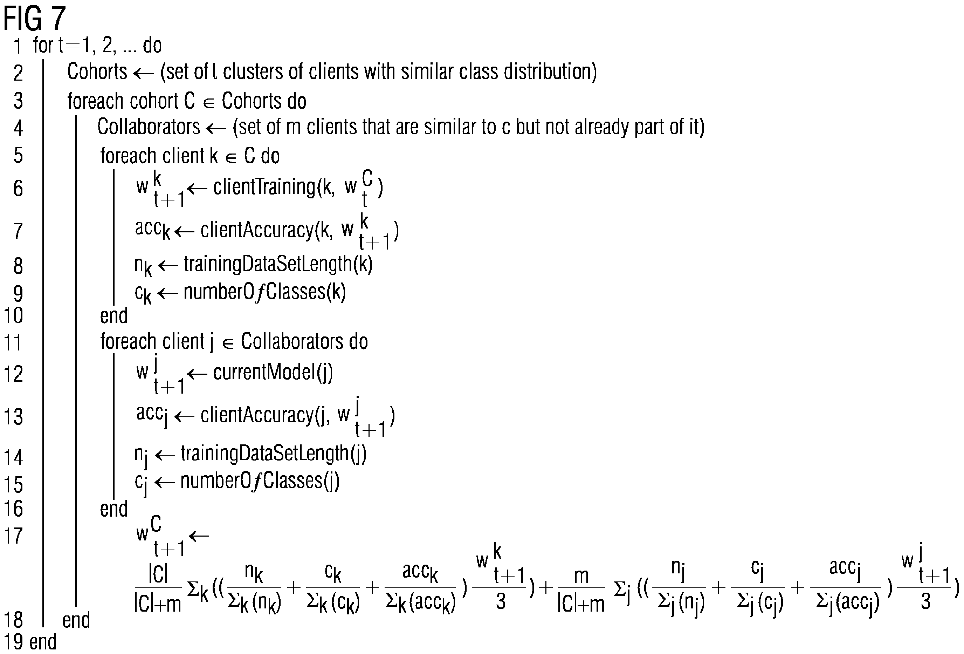

**Fig. 7** zeigt schematisch ein weiteres Ausführungsbeispiel der Erfindung als Pseudo-Code.

Das Verhalten eines IFL-Servers, der das globale IFL-Kohorten-Lernen ausführt, was zu einem globalen Modell pro Kohorte C und Zeitschritt t führt, wird nun näher erläutert.

Zu Beginn jedes Zeitschritts wird die aktuelle Kohorten-Konfiguration ausgewertet und möglicherweise neue Cluster von Kunden mit aktualisierten Trainingsdaten berücksichtigt.

Für jede Kohorte werden m Mitarbeiter ausgewählt, um Wissen von Kunden mit unterschiedlichen Klassenverteilungen einzuführen.

Die eigentliche Interaktion mit Kunden und Mitarbeitern erfolgt in den beiden inneren Schleifen, um auf der Grundlage des aktuellen Modells ein Training für Kundenkohorten zu initiieren.

Darüber hinaus können Metriken, wie Genauigkeit, Größe des Trainingsdatensatzes und Anzahl der Klassen erfasst werden.

Diese Metriken sind wichtig, um die Modellparameter für das Gruppenmodell in der nächsten Runde $t + 1$ zu aggregieren.

Im Unterschied zu bekannten Methoden, die auf föderiertem Lernen aufbauen, verwendet die Mittelung von lokalen Kundenmodellen in Zeile 17 nicht nur die Datensatz-Größe $n_k$ als Beteiligungsgewicht.

Daher werden Kunden-Modelle auch bezüglich ihrer Anzahl an unterschiedlichen Klassen $c_k$ und der Genauigkeit $acc_k$ gewichtet. Diese Daten werden von den Kunden bereitgestellt und erlauben so gute Modelle, das heißt mit entsprechend hoher Genauigkeit, mit vielen Klassen und die Daten sind eher im aggregierten globalen Gruppen-modell $w_{t+1}^c$ in Zeile 17 gewichtet.

Um das Wissen von Mitarbeitern, auch "collaborateur" genannt, zu berücksichtigen, zeigt der zweite Summand in Zeile 17 die gewichtete Eingabe von $m$ Mitarbeiter-Modellen.

**Bezugszeichenliste:**

| | |
|---|---|
| 1 | Netzwerk |
| 5-7 | lokales Netzwerk |
| 10-12, 15-17 | Steuervorrichtung, Edge-Gerät |
| 20-22, 25-27 | IoT-Gerät, technisches Gerät, "Asset" |
| FLS, FLS1 | Modell-Server |
| FLM, FLM1 | Gruppen-Manager |
| G1, G2 | Gruppe |
| A1-A3 | Anlage |
| S | System |
| M0, MB | Basis-Modell |
| M01 | Betriebs-Modell, "Operation"-Modell |
| MC1-MC3 | Centroid-Modell |
| MG, MG1, MG2 | Gruppen-Modell |
| M1-M4, MS1-MS3 | Ähnlichkeits-Modell, "Similarity"-Modell |
| MES | Produktions-System "Manufacturing Execution System" |
| ERP | Ressourcen-Planungssystem "Enterprise Resource Planning" |
| P1-P9, Q1-Q9, R1-R7 | Prozessschritte |
| P1 | Daten aufbereiten |
| P2 | Anomalie Detektion |
| P3 | Geräte-Steuerung |
| P3a | stopp/ reduzieren |
| P3b | Alarm |
| P3c | Produktion neu planen |
| P3d | Ersatzteil bestellen |
| P4 | Modellieren und Auswerten von Metriken |
| P5 | Verteilung von Modellen und Daten |
| P6 | Gruppen-Konfiguration |
| P7 | Aktualisierung von Aggregaten |
| P8 | Modell-Aktualisierung |
| P9 | erneutes Training mit aktualisierten Modellen |
| Q1 | Erzeugen eines Geräte-Basismodells MG |
| Q2 | Verteilen des Geräte-Basismodells MG an Edge-Vorrichtungen |
| Q3 | Erzeugen und Trainieren auf Basis des Geräte-Basismodells MB von Gerätemodellen durch die Edge-Vorrichtungen |
| Q4 | Bereitstellen der Gerätemodelle MS1-MS3 an einen IFL-Server FLS1 und Speichern. |
| Q5 | Laden und Bereitstellen der Ähnlichkeitsmodelle an Edge-Vorrichtungen |

| Q6 | Anwenden der Ähnlichkeitsmodelle auf Edge-Vorrichtung und Bestimmen von Ähnlichkeitsfunktionen bzw. Ähnlichkeitswerten |
| Q7 | Übermitteln der Ähnlichkeitsfunktionen bzw. der Ähnlichkeitswerte an den IFL-Server. |
| Q7a | Berechnen von Centroid-Modell |
| Q7b | Speichern der Ähnlichkeitsfunktionen bzw. der Ähnlichkeitswerte in einer Ähnlichkeitsmatrix SIM |
| Q8 | Bilden von Modell-Gruppen |
| Q9 | Ansteuern des Geräts mit Betriebs-Modell |
| R1 | Empfangen eines Geräte-Basismodells |
| R2 | Erzeugen, Trainieren und Speichern eines ersten Gerätemodells |
| R3 | Bereitstellen des Gerätemodells |
| R4 | Empfangen eines zweiten Gerätemodells |
| R5 | Anwenden des zweiten Gerätemodells und Bestimmen einer Ähnlichkeitsfunktion bzw. Ähnlichkeitswerts |
| R6 | Bereitstellen der Ähnlichkeitsfunktion bzw. des Ähnlichkeitswerts |
| R7 | Empfangen eines Betriebs-Modells |

**Patentansprüche**

1. Verfahren zum Betrieb einer technischen Anlage (A1-A3) mit einem optimalen Modell, wobei die Anlage (A1-A3) Teil eines Systems (S) mit einer ersten technische Anlage (A1) und zumindest einer zweiten technische Anlage (A2, A3) ist, jede Anlage (A1-A3) umfassend eine Steuervorrichtung (15-17) mit einem Speicher und ein verbundenes technisches Gerät (25-27), und das System ferner einen Server (FLS1) mit einem Speicher (MEM) aufweist, wobei folgende Verfahrensschritte (Q1-Q9) ausgeführt werden:

Q1) Erzeugen eines Geräte-Basismodells (MB) bezüglich zumindest eines der technischen Geräte (25-27),
Q2) Verteilen des Geräte-Basismodells (MB) an eine erste und zumindest eine zweite Steuervorrichtung (15-17) der jeweiligen Anlagen,
Q3) Erzeugen, Trainieren und Speichern eines ersten Gerätemodells (MS1) durch die erste Steuervorrichtung (15) und zumindest eines zweiten Gerätemodells (MS2, MS3) durch die zumindest eine zweite Steuervorrichtung (16, 17), jeweils auf Basis des Geräte-Basismodells (MB),
Q4) Bereitstellen des ersten und des zumindest einen zweiten Gerätemodells (MS1-MS3) an den Server (FLS1), sowie Speichern des ersten und des zumindest einen zweiten Gerätemodells (MS1-MS3) in einem Modell-Speicher (MEM) des Servers (FLS1),
Q5) Laden und Bereitstellen zumindest jener Gerätemodelle (MS2, MS3) an die entsprechende Steuer-Vorrichtung (15), welche nicht bereits in der Steuervorrichtung (15) vorhanden sind,
Q6) Anwenden der im Schritt Q5) bereitgestellten Gerätemodelle (MS2, MS3) auf die jeweilige Steuervorrichtung (15) und Bestimmen einer jeweiligen Ähnlichkeitsfunktion (SF1_2, SF1_3) bezüglich der ersten Steuervorrichtung (15), sowie eines ersten Ähnlichkeitsmodells (MS1, MS3) auf die zumindest eine zweite Steuervorrichtung (16, 17) und Bestimmen einer jeweiligen Ähnlichkeitsfunktion (SF2_1, SF2_3, SF_3_1, SF3_2) bezüglich der zumindest einen zweiten Steuervorrichtung (16, 17),
Q7) Übermitteln der jeweiligen Ähnlichkeitsfunktionen (SF1_2, SF1_3, SF2_1, SF2_3, SF_3_1, SF3_2) an den Server (FLS1),
Q8) Bilden von zumindest einer Kunden-Gruppe und Erstellen eines jeweiligen Gruppen-Modells (MG1-MG3) durch föderiertes Lernen innerhalb der Kunden-Gruppe unter Anwendung der Ähnlichkeitsfunktionen (SF1_2, SF1_3, SF2_1, SF2_3, SF_3_1, SF3_2) durch den Server (FLS1),
Q9) Auswählen und Laden von einem Betriebs-Modell (M01) aus dem zumindest einen Gruppen-Modell (MG1) für die erste Anlage (A1) und Bereitstellen des Betriebs-Modells (M01) an deren Steuervorrichtung (15), sowie Ansteuern des entsprechenden Geräts (25) unter Zuhilfenahme des ausgewählten Betriebs-Modells (M01) als optimales Modell.

2. Verfahren nach dem vorhergehenden Anspruch, wobei nach dem Schritt Q7) ein weiterer Schritt ausgeführt wird:
Q7a) Berechnen von zumindest einem Centroid-Modell (MC1-MC3) auf Basis eines "federated averaging"-Verfahrens unter Verwendung der Ähnlichkeitsfunktionen (SF1_2, SF1_3, SF2_1, SF2_3, SF_3_1, SF3_2),
und im Schritt Q8) beim Bilden von zumindest einem Gruppen-Modell (MG1-MG3) zumindest ein Centroid-Modell (MC1-MC3) berücksichtigt wird.

**3.** Verfahren nach einem der vorhergehenden Ansprüche, wobei nach dem Schritt Q7) ein weiterer Schritt ausgeführt wird:
Q7b) Speichern der Ähnlichkeitsfunktionen (SF1_2, SF1_3, SF2_1, SF2_3, SF_3_1, SF3_2) in einer Ähnlichkeitsmatrix (SIM).

**4.** Verfahren nach einem der vorhergehenden Ansprüche, wobei im Schritt Q8) beim Bilden des zumindest einen Gruppen-Modells (MG1-MG3) zumindest eine Gewichtungsfunktion angewandt wird.

**5.** Verfahren nach einem der vorhergehenden Ansprüche, wobei das Erzeugen des Geräte-Basismodells (MB) vom Server durchgeführt wird.

**6.** Verfahren nach einem der vorhergehenden Ansprüche, wobei die jeweilige Anlage (A1) über ein lokales Netzwerk (5) mit der jeweiligen Steuervorrichtung (15) verbunden ist, und über ein öffentliches Netzwerk (1) mit dem Server (FLS1) verbundenen ist.

**7.** Verfahren nach einem der vorhergehenden Ansprüche, wobei die zumindest eine zweite Anlage (A2, A3) jeweils über ein lokales Netzwerk (6, 7) mit der jeweiligen Steuervorrichtung (16, 17) verbunden ist, und jeweils über ein öffentliches Netzwerk (1) mit dem Server (FLS1) verbundenen ist.

**8.** System (S) zum Betrieb einer technischen Anlage (A1-A3) mit einem optimalen Modell, wobei das System (S) eine erste technische Anlage (A1) und zumindest eine zweite technische Anlage (A2, A3) umfasst, jede Anlage (A1-A3) umfassend eine Steuervorrichtung (15-17) mit einem Speicher und ein technisches Gerät (25-27), und das System ferner einen Server (FLS1) mit einem Speicher (MEM) aufweist, **dadurch gekennzeichnet, dass** das System (S) dazu eingerichtet ist, die Verfahrensschritte nach einem der vorhergehenden Ansprüche auszuführen.

## Claims

**1.** Method for operating a technical installation (A1-A3) with an optimal model, wherein the installation (A1-A3) is part of a system (S) with a first technical installation (A1) and at least one second technical installation (A2, A3), each installation (A1-A3) including a control apparatus (15-17) with a memory and a connected technical device (25-27) and wherein the system furthermore comprises a server (FLS1) with a memory (MEM), wherein the following method steps (Q1-Q9) are executed:

Q1) creating a basic device model (MB) with respect to at least one of the technical devices (25-27),
Q2) distributing the basic device model (MB) to a first and at least one second control apparatus (15-17) of the respective installations,
Q3) creating, training and storing a first device model (MS1) by the first control apparatus (15) and at least one second device model (MS2, MS3) by the at least one second control apparatus (16, 17), in each case on the basis of the basic device model (MB),
Q4) providing the first and the at least one second device model (MS1-MS3) to the server (FLS1) and storing the first and the at least one second device model (MS1-MS3) in a model memory (MEM) of the server (FLS1),
Q5) loading and providing at least those device models (MS2, MS3) which are not already present in the control apparatus (15) to the corresponding control apparatus (15),
Q6) applying the device models (MS2, MS3) provided in step Q5) to the respective control apparatus (15) and determining a respective similarity function (SF1_2, SF1_3) with respect to the first control apparatus (15) and a first similarity model (MS1, MS3) to the at least one second control apparatus (16, 17) and determining a respective similarity function (SF2_1, SF2_3, SF_3_1, SF3_2) with respect to the at least one second control apparatus (16, 17),
Q7) transferring the respective similarity functions (SF1_2, SF1_3, SF2_1, SF2_3, SF_3_1, SF3_2) to the server (FLS1),
Q8) forming at least one client group and producing a respective group model (MG1-MG3) by federated learning within the client group by applying the similarity functions (SF1_2, SF1_3, SF2_1, SF2_3, SF_3_1, SF3_2) by the server (FLS1),
Q9) selecting and loading an operation model (M01) from the at least one group model (MG1) for an installation (A1) and providing the operation model (M01) to the control apparatus (15) thereof and actuating the corresponding device (25) using the selected operation model (M01) as the optimal model.

**2.** Method according to the preceding claim, wherein a further step is executed after step Q7):
Q7a) calculating at least one centroid model (MC1-MC3) on the basis of a federated averaging method using the similarity functions (SF1_2, SF1_3, SF2_1, SF2_3, SF_3_1, SF3_2)
and in step Q8), at least one centroid model (MC1-MC3) is taken into account when forming at least one group model (MG1-MG3).

**3.** Method according to one of the preceding claims, wherein a further step is executed after step Q7):
Q7b) storing the similarity functions (SF1_2, SF1_3, SF2_1, SF2_3, SF_3_1, SF3_2) in a similarity matrix (SIM).

**4.** Method according to one of the preceding claims, wherein in step Q8) at least one weighting function is applied when forming the at least one group model (MG1-MG3).

**5.** Method according to one of the preceding claims, wherein the basic device model (MB) is created by the server.

**6.** Method according to one of the preceding claims, wherein the respective installation (A1) is connected to the respective control apparatus (15) via a local network (5) and connected to the server (FLS1) via a public network (1).

**7.** Method according to one of the preceding claims, wherein the at least one second installation (A2, A3) is in each case connected to the respective control apparatus (16, 17) via a local network (6, 7) and in each case is connected to the server (FLS1) via a public network (1).

**8.** System (S) for operating a technical installation (A1-A3) with an optimal model, wherein the system (S) includes a first technical installation (A1) and at least one second technical installation (A2, A3), each installation (A1-A3) including a control apparatus (15-17) with a memory and a technical device (25-27) and wherein the system furthermore comprises a server (FLS1) with a memory (MEM), **characterised in that** the system (S) is configured to execute the method steps according to one of the preceding claims.

## Revendications

**1.** Procédé permettant de faire fonctionner une installation technique (A1-A3) avec un modèle optimal, l'installation (A1-A3) faisant partie d'un système (S) avec une première installation technique (A1) et au moins une deuxième installation technique (A2, A3), chaque installation (A1-A3) comprenant un dispositif de commande (15-17) avec une mémoire et un appareil technique connecté (25-27), et le système présente en outre un serveur (FLS1) avec une mémoire (MEM), dans lequel les étapes de procédé (Q1-Q9) suivantes sont exécutées :

Q1) générer un modèle de base d'appareil (MB) pour au moins l'un des appareils techniques (25-27) ;
Q2) distribuer le modèle de base d'appareil (MB) à un premier et à au moins un deuxième dispositif de commande (15-17) des installations respectives,
Q3) générer, former et mettre en mémoire un premier modèle d'appareil (MS1) par l'intermédiaire du premier dispositif de commande (15) et au moins un deuxième modèle d'appareil (MS2, MS3) par le au moins un deuxième dispositif de commande (16, 17), chacun sur la base du modèle de base d'appareil (MB),
Q4) fournir au serveur (FLS1) le premier et le au moins un deuxième modèle d'appareil (MS1-MS3), et mettre en mémoire le premier et le au moins un deuxième modèle d'appareil (MS1-MS3) dans une mémoire de modèle (MEM) du serveur (FLS1),
Q5) charger et mettre à disposition au moins ces modèles d'appareil (MS2, MS3) sur le dispositif de commande correspondant (15) qui ne sont pas déjà présents dans le dispositif de commande (15),
Q6) appliquer les modèles d'appareil (MS2, MS3) fournis à l'étape Q5) au dispositif de commande respectif (15) et déterminer une fonction de similitude respective (SF1_2, SF1_3) par rapport au premier dispositif de commande (15), ainsi qu'un premier modèle de similitude (MS1, MS3) au au moins un deuxième dispositif de commande (16, 17), et déterminer une fonction de similitude respective (SF2_1, SF2_3, SF3 1, SF3_2) par rapport au au moins un deuxième dispositif de commande (16, 17),
Q7) transmettre les fonctions de similitude respectives (SF1_2, SF1_3, SF2_1, SF2_3, SF3_1, SF3_2) au serveur (FLS1),
Q8) former au moins un groupe de clients et créer un modèle de groupe respectif (MG1-MG3) par apprentissage fédéré au sein du groupe de clients en utilisant les fonctions de similitude (SF1_2, SF1_3, SF2_1, SF2_3, SF3_1, SF3_2) via le serveur (FLS1),
Q9) sélectionner et charger un modèle de fonctionnement (M01) à partir du au moins un modèle de groupe (MG1) pour la première installation (A1) et mettre à disposition le modèle de fonctionnement (M01) sur son dispositif de commande (15), ainsi que commander l'appareil correspondant (25) en utilisant le modèle de fonctionnement sélectionné (M01) en tant que modèle optimal.

2. Procédé selon la revendication précédente, dans lequel une étape supplémentaire est exécutée après l'étape Q7), consistant à :
Q7a) calculer au moins un modèle centroïde (MC-MC3) sur la base d'un procédé de « federated averaging » en utilisant les fonctions de similitude (SF1_2, SF1_3, SF2_1, SF2_3, SF3_1, SF3_2),
et à l'étape Q8), au moins un modèle centroïde (MC1-MC3) est pris en compte lors de la formation d'au moins un modèle de groupe (MG1-MG3).

3. Procédé selon l'une quelconque des revendications précédentes, dans lequel, après l'étape Q7), une étape supplémentaire est exécutée, consistant à :
Q7b) mettre en mémoire les fonctions de similitude (SF1_2, SF1_3, SF2_1, SF2_3, SF3_1, SF3_2) dans une matrice de similitude (SIM).

4. Procédé selon l'une quelconque des revendications précédentes, dans lequel au moins une fonction de pondération est appliquée dans l'étape Q8) lors de la formation de l'au moins un modèle de groupe (MG1-MG3).

5. Procédé selon l'une quelconque des revendications précédentes, dans lequel la génération du modèle de base d'appareil (MB) est effectuée par le serveur.

6. Procédé selon l'une quelconque des revendications précédentes, dans lequel l'installation respective (A1) est reliée au dispositif de commande respectif (15) par l'intermédiaire d'un réseau local (5) et est reliée au serveur (FLS1) par l'intermédiaire d'un réseau public (1).

7. Procédé selon l'une quelconque des revendications précédentes, dans lequel la au moins une deuxième installation (A2, A3) est reliée respectivement au dispositif de commande respectif (16, 17) par l'intermédiaire d'un réseau local (6, 7) et est reliée respectivement au serveur (FLS1) par l'intermédiaire d'un réseau public (1).

8. Système (S) permettant de faire fonctionner une installation technique (A1-A3) comprenant un modèle optimal, le système (S) comprenant une première installation technique (A1) et au moins une deuxième installation technique (A2, A3), chaque installation (A1-A3) comprenant un dispositif de commande (15-17) avec une mémoire et un appareil technique (25-27), et le système présente en outre un serveur (FLS1) avec une mémoire (MEM), **caractérisé en ce que** le système (S) est configuré pour exécuter les étapes du procédé selon l'une quelconque des revendications précédentes.

FIG 1

FIG 2

# FIG 3

## FIG 4

## FIG 5

```
1   (Cohorts, Centroids) ← buildCohorts(Clients)
2   for t = 1, 2, ... do
3       foreach Coh_i ∈ Cohorts do
4           foreach client c ∈ Coh_i do
5               w_{t+1}^c ← clientTraining(c, w_t^{Coh_i})
6               n_c ← trainingDataSetLength(c)
7               s_c ← similarityToCentroid(centroid_i, c)
8           end
9           w_{t+1}^{Coh_i} ← Σ_c(( n_c/Σ_c(n_c) + s_c/Σ_c(s_c) ) w_{t+1}^c/2)
10      end
11  end
```

$$1 \quad (\text{Cohorts, Centroids}) \leftarrow \text{buildCohorts(Clients)}$$
$$2 \quad \text{for } t = 1, 2, \ldots \text{ do}$$
$$3 \quad \text{foreach } \text{Coh}_i \in \text{Cohorts do}$$
$$4 \quad \text{foreach client } c \in \text{Coh}_i \text{ do}$$
$$5 \quad w_{t+1}^c \leftarrow \text{clientTraining}(c, w_t^{\text{Coh}_i})$$
$$6 \quad n_c \leftarrow \text{trainingDataSetLength}(c)$$
$$7 \quad s_c \leftarrow \text{similarityToCentroid}(\text{centroid}_i, c)$$
$$8 \quad \text{end}$$
$$9 \quad w_{t+1}^{\text{Coh}_i} \leftarrow \sum_c \left( \left( \frac{n_c}{\sum_c(n_c)} + \frac{s_c}{\sum_c(s_c)} \right) \frac{w_{t+1}^c}{2} \right)$$
$$10 \quad \text{end}$$
$$11 \quad \text{end}$$

# FIG 6

request trained similarity models $M_{all}=\{m_1, m_2, ..., m_n\}$ from all Clients based on skeleton $m_{skeleton}$

foreach $c \in$ Clients do

    $sim_c=$computeSimilarities $(M_{all}, c)$

    attach $sim_c$ to similarity matrix SIM

end

invoke arbitrary similarity matrix based cluster algorithm using SIM and assign results to Cohorts

foreach $Coh_i \in$ Cohorts do

    set $centroid_i$ to the cohort similarity model resulting from FedAvg of similarity models of $M_{Coh_i}$

    attach $centroid_i$ to Centroids

end

## FIG 7

EP 3 901 713 B1

```
for t=1, 2, ... do
    Cohorts ← (set of l clusters of clients with similar class distribution)
    foreach cohort C ∈ Cohorts do
        Collaborators ← (set of m clients that are similar to c but not already part of it)
        foreach client k ∈ C do
```

$$w^k_{t+1} \leftarrow \text{clientTraining}(k, w^C_t)$$

$$acc_k \leftarrow \text{clientAccuracy}(k, w^k_{t+1})$$

$$n_k \leftarrow \text{trainingDataSetLength}(k)$$

$$c_k \leftarrow \text{numberOf\!Classes}(k)$$

```
        end
        foreach client j ∈ Collaborators do
```

$$w^j_{t+1} \leftarrow \text{currentModel}(j)$$

$$acc_j \leftarrow \text{clientAccuracy}(j, w^j_{t+1})$$

$$n_j \leftarrow \text{trainingDataSetLength}(j)$$

$$c_j \leftarrow \text{numberOf\!Classes}(j)$$

```
        end
```

$$w^C_{t+1} \leftarrow$$

$$\frac{|C|}{|C|+m} \Sigma_k \left(\left(\frac{n_k}{\Sigma_k(n_k)} + \frac{c_k}{\Sigma_k(c_k)} + \frac{acc_k}{\Sigma_k(acc_k)}\right) \frac{w^k_{t+1}}{3}\right) + \frac{m}{|C|+m} \Sigma_j \left(\left(\frac{n_j}{\Sigma_j(n_j)} + \frac{c_j}{\Sigma_j(c_j)} + \frac{acc_j}{\Sigma_j(acc_j)}\right) \frac{w^j_{t+1}}{3}\right)$$

```
    end
end
```

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2020064788 A1